# EUROPEAN PATENT SPECIFICATION

(11) **EP 1 004 429 B1**
(45) Date of publication and mention of the grant of the patent: **16.03.2005**
(21) Application number: 99101341.8
(22) Date of filing: 25.01.1999
(51) Int. Cl.: B29D 23/20

(54) **Machine and method for manufacturing thermoplastic tubes**
Vorrichtung und Verfahren zur Herstellung von thermoplastischen Schläuchen
Appareil et procédé pour la fabrication de tubes thermoplastiques

(30) Priority: 25.11.1998 US 199500; 25.11.1998 US 200054
(43) Date of publication of application: 31.05.2000
(73) Proprietor: Silgan Tubes Corporation, Woodstock, Illinois 60098 (US)
(72) Inventor: KIERAS, Ronald Edward, Woodstock, IL 60098 (US); RHOADES, John J., Poplar Grove, IL 61065 (US)
(74) Representative: Frankland, Nigel Howard

(56) References cited:
- EP-A- 0 475 126
- EP-A- 0 812 675
- DE-A- 3 422 812
- DE-B- 1 151 369
- FR-A- 2 596 699
- US-A- 2 913 768
- US-A- 3 198 349
- US-A- 4 123 312
- US-A- 4 285 904
- US-A- 4 310 366
- US-A- 4 906 170
- US-A- 5 211 798

## Description

The present invention is a machine and method for manufacturing thermoplastic tubes from thermoplastic sleeves.

US-A-3,198,349 discloses a loading device for a machine working on tubular work pieces. The loading device operates to load tube jackets onto vertical mandrels of machines which make tube heads and weld the jackets to the heads to make tubes with integral heads. The apparatus has a horizontal rotary disc, with a plurality of bearings fixed to the upper part of the disc. Underneath each bearing a vertical mandrel is provided which extends downwardly. The mandrels may be indexed between successive working positions.

US-A-4,310,366 discloses a method and apparatus for making a resin caulker which comprises a generally cylindrical housing provided with a nozzle. The disclosed apparatus includes a plurality of horizontal mandrels mounted on a machine which indexes the mandrels between successive work stations. In operation of the machine a cylindrical element or barrel is mounted on a mandrel, and the mandrel is subsequently moved through successive stations where components are mounted onto the barrel or different operations are performed on the barrel. The form of the barrel does not change substantially during the described operations.

US-A-5,211,798 relates to an apparatus for production of tubes from pre-finished pipe elements, by pressing a tube head from a heated blank, with a simultaneous bonding of the tube head to a tube pipe. The Specification discloses a horizontal indexing table, with eight dies fixed in place and evenly distributed about the circumference of the table. Eight work stations are provided and each die is successively moved past each of the eight work stations. Vertical mandrels are provided which are located above the dies. Initially a pipe element is mounted on one of the vertical mandrels and the pipe element is moved successively between work stations where work operations are performed to produce the finished tube.

According to one aspect of this invention there is provided a method of manufacturing thermoplastic tubes from thermoplastic sleeves comprising: providing longitudinally stretched, extruded thermoplastic sleeves having a continuous wall with inner and outer wall surfaces; providing an indexing device rotatable about a shaft: providing supporting means constituted by forming mandrels on said indexing device for supporting each of said sleeves; loading each of said sleeves onto each of said forming mandrels in a first location of a closed path, each of said forming mandrels having a head forming end, said loading being carried out by positioning each sleeve over a respective one of the forming mandrels with an exposed portion of each sleeve having an open end extending beyond said head forming end; advancing said sleeves mounted on said forming mandrels along said closed path in response to rotating said indexing device in a predetermined direction; forming a head on each of said sleeves, by moulding thermoplastic material of the sleeves, to create tubes in a second location of said closed path downstream of said first location, wherein said forming of a head on said sleeves to create tubes comprises the steps of: disposing the longitudinal axis of the forming mandrel in horizontal orientation; rotating each of said forming mandrels about said axis; heating the inner wall surface of said exposed portion of each said longitudinally stretched, extruded thermoplastic sleeve during said rotating by a heat source so that the shape of the exposed portion is controlled and the exposed potion is heated uniformly, wherein the heated exposed portion shrinks and thickensstopping the rotating of said forming mandrel, and pressing the heated exposed portion with sufficient force into a mould cavity to form a head on each said thermoplastic sleeves from the shrunk and thickened exposed portion to thereby form said headed thermoplastic tube; advancing said tubes mounted on said forming mandrels along said closed path in response to rotating said indexing device in a predetermined direction; and unloading said tubes from said forming mandrels in a third location of said closed path downstream of said head forming location between said second and said first location; providing an indexing device rotatable about a shaft.

Preferably the method comprises the further steps of decorating said tubes in a further location of said closed path downstream of the second location, and finishing the tubes in another location of the said closed path which is downstream of said' further location, and upstream of said third location.

Advantageously finishing said tubes is a finishing step selected from the group consisting of protective sealing, capping and torquing.

Conveniently decorating said tubes is a decoration step selected from the group consisting of ink jet printing, offset printing, screen printing, embossing, labelling and coating.

Advantageously the method further comprises the steps of recording selected information on each of said tubes in a predetermined location of said closed path downstream of said second location; generating a signal based on said selected information; inputting said signal to a programmable logic controller (PLC) device; and, with use of said signal, rejecting undesirable tubes in a further location of said closed path downstream of said predetermined location.

Conveniently the process of loading a sleeve onto the supporting means comprises loading a flat sheet onto said supporting means; forming the flat sheet on said supporting means into the form of a sleeve; and welding opposed sheet edges together to form a closed sleeve.

According to a further aspect of this invention there is provided an apparatus for converting Thermoplastic sleeves into completed thermoplastic tubes, with each completed tube having a head, comprising: an indexing device rotatable about a shaft; forming mandrels for supporting sleeves in a horizontal orientation mounted on said indexing device for advancement along a closed path in response to relative rotation of said indexing device in a predetermined direction; a frame for mounting said indexing device and a plurality of manufacturing stations; said plurality of manufacturing stations comprising: means for loading said sleeves onto said mandrels in a first location of said closed path; means for forming a head on each sleeve, from thermoplastic material of the sleeve, to form tubes in a second forming location of said closed path downstream of said first location, said forming means being in the horizontal orientation, said means for forming of a head on said sleeves to create tubes further comprising: means for disposing the longitudinal axis of each forming mandrel in a horizontal orientation; means for rotating each of said forming mandrels about said axis, means for heating the inner wall surface of said exposed portion of each said longitudinally stretched, extruded thermoplastic sleeve during said rotating by a heat source so that the shape of the exposed portion is controlled and the exposed portion is heated uniformly, wherein the heated exposed portion shrinks and thickens to draw the heated exposed portion into a shrunken and thickened exposed portion; means for stopping the rotating of said forming mandrel; and means for pressing the heated exposed portion with sufficient force into a mould cavity to form a head on each said thermoplastic sleeves from the shrunken and thickened exposed portion to thereby form said headed thermoplastic tube; and means for unloading said tubes from said supporting means in third location of said closed path downstream of said at least one completing location.

Preferably the apparatus further comprises means for completing said tubes in at least one location of said closed path downstream of said forming location.

Preferably said means for loading sleeves onto said supporting means is a member selected from the group consisting of a push rod driven by an air cylinder; a push rod driven by a cam driver; an advancing and retracting linear actuator; a crank motion device and a servo-motor driven push rod.

Conveniently said means for forming a head on said sleeve is a member selected from the group consisting of a heater and a mould die; a sonic welder and a heat welder.

Advantageously said means for unloading said tubes from said supporting means is a member selected from the group consisting of a stripper driven by an air cylinder; a stripper driven by a cam driver; an advancing and retracting linear actuator; and air blower; a crank motion stripper and a servo-motor driven stripper.

Conveniently the apparatus further comprises a PLC device connected to said indexing device, said loading means, said head forming means and said unloading means.

Preferably said indexing device is a member selected from the group consisting of an indexing table and an indexing drum.

The invention will now be described, by way of example, with reference to the accompanying drawings in which:
FIGURE 1 is a schematic view of a machine of the present invention of a first embodiment having a PLC device,
FIGURE 2 is a schematic view of the machine of the first embodiment without the PLC device, shown only with an indexing table, holding mandrels and a mounting ring for mounting manufacturing stations,
FIGURE 3 is a schematic view from the rear of the machine of Figure 2,
FIGURE 4 is a schematic view of a housing for seating a holding mandrel in an indexing table,
FIGURE 5 is a schematic view of a machine of the first embodiment without the PLC device shown with supply and removal means,
FIGURE 6 is a schematic view of the machine of the first embodiment without the PLC device shown from a lower perspective;
FIGURE 7 is a schematic view of the machine of the first embodiment shown from the front with various stations identified,
FIGURE 8 shows the relative locations of fourteen different manufacturing stations located around the circumference of an indexing table, comprising a second embodiment of the machine of the present invention,
FIGURE 9 is a schematic view of an indexing table and the fourteen manufacturing stations of Figure 8,
FIGURE 10 is a schematic view of a load station,
FIGURE 11 is a schematic view of a preheat station or heat station,
FIGURE 12 is a schematic view of a heating probe of the preheat or heat stations shown in Figure 11,
FIGURE 13 is a schematic view of a mould station,
FIGURE 14 is a cross-sectional view of a mould die used in the mould station of Figure 13,
FIGURE 15 is a schematic view of a treat station,
FIGURE 16 is a schematic view of a label station,
FIGURE 17 is a schematic view of a print station,
FIGURE 18 is a schematic view of a cure station,
FIGURE 19 is a schematic view of a coat station,
FIGURE 20 is a schematic view of a tab seal station,
FIGURE 21 is a schematic view of a cap station,
FIGURE 22 is a schematic view of a torque station,
FIGURE 23 is a schematic view of an unload station, and
FIGURE 24 is a schematic view of a sonic welding station.

The machine of the present invention manufactures thermoplastic tubes from thermoplastic sleeves by a variety of different process methods. The machine is a single apparatus having an indexing device transportation means, i.e an indexing table or indexing drum, with a plurality of mandrels for holding hollow thermoplastic sleeves for the purpose of transporting the same around a closed manufacturing path. The manufacturing path of the machine of the present invention comprises a series of stations which have mechanical devices for carrying out the manufacturing steps necessary to produce thermoplastic tubes from thermoplastic sleeves. A tube, as the term is used herein, refers to any thermoplastic sleeve having at least a head on one end. A sleeve, as the term is used herein, is a hollow body of a discrete size of any shape. A sleeve may be fabricated from a sheet, extruded in sleeve form, or made by any other known means. The sleeves used in the present invention are preferably cut from an elongated longitudinally stretched and extruded thermoplastic hollow cylinder.

The thermoplastic tubes produced according to the present method can be formed from various thermoplastic materials. Such thermoplastic materials include, but are not limited to, high density polyethylene, low density polyethylene, polypropylene, a polyester such as polyethylene terephthalate, polycarbonates, polyvinyl chloride, and the like.

Thermoplastic tubes are formed from a flexible material and are readily squeezable and collapsible to force the contents of the tube out of an orifice formed in the end of the tube at the head portion. They are generally of a size having a wall thickness of the sleeve portion of between about 0.25 to 1.01 mm (0.010 to 0.040 inch) in thickness, while a shoulder and a neck portion of the tube will be thicker than the wall of the sleeve, generally between 0.89 to 1.14 mm (0.035 to 0.045 inch) thick. Since the tube is preferably formed from an extruded sleeve, the wall thickness of the sleeve portion will be very uniform, with a variance in wall thickness of the sleeve portion being only about + or - 10 percent.

Preferably the extruded sleeve from which the thermoplastic tube is formed is a sleeve cut from an extrusion which has a wall thickness in the molten state preferably two to three times the wall thickness of the final cooled extruded thickness. The extrusion from which the sleeve is cut can be of any shape. Consequently, the sleeve cut from the extrusion can take the shape of the extrusion like cylindrical, oval, elliptical, rectangular or any other shape. The shape of the sleeve used in the present invention is typically cylindrical. Such a tubular extrusion, as is known, is formed by extruding thermoplastic material from an extrusion annulus in a molten state and stretching the hot tubular form, in the direction of the longitudinal axis, into a tube or sleeve having a wall thickness one-half (½) one-third (¹/₃), or less, than the extrusion annulus. Such a stretch oriented extruded sleeve, when heated above the glass transition temperature of the thermoplastic material, due to the plastic memory of the thermoplastic material, will increase in thickness to the thickness of the molten material exiting the extrusion annulus, and shrink in length, thus providing sufficient molten plastic mass to form a head on the sleeve according to the present method. When using high density polyethylene (HDPE) or low density polyethylene (LDPE), for example, the annulus would extrude a tubular form of about 3.81 cm (1.5 inch) in diameter having a wall thickness between about 1.01 to 1.16 mm (0.040-0.046 inch), which would be stretched into a stretch oriented extruded sleeve of about 2.54 cm (1.0 inch) in diameter having a wall thickness between about 0.38 to 0.45 mm (0.015-0.018 inch). The thermoplastic sleeves used in the present invention can be of any typical diameter such as 1.27, 1.58, 1.90, 2.22, 2.54, 3.01, 3.49, 3.81 and 5.08 cm (1/2, 5/8, 3/4, 7/8, 1, 1 3/16, 1 3/8, 1 ½ any 2 inches).

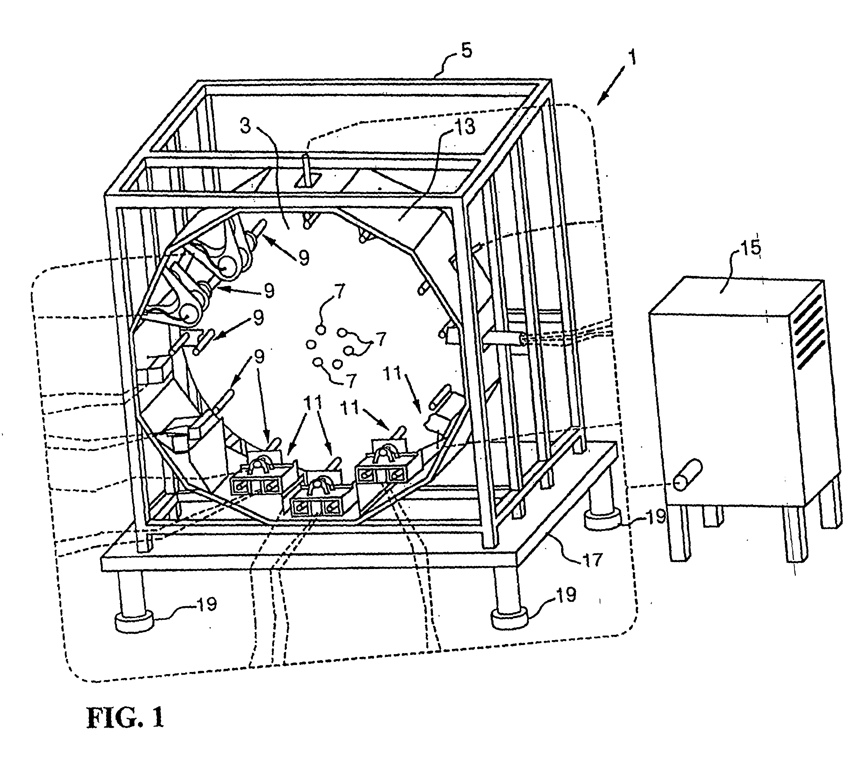

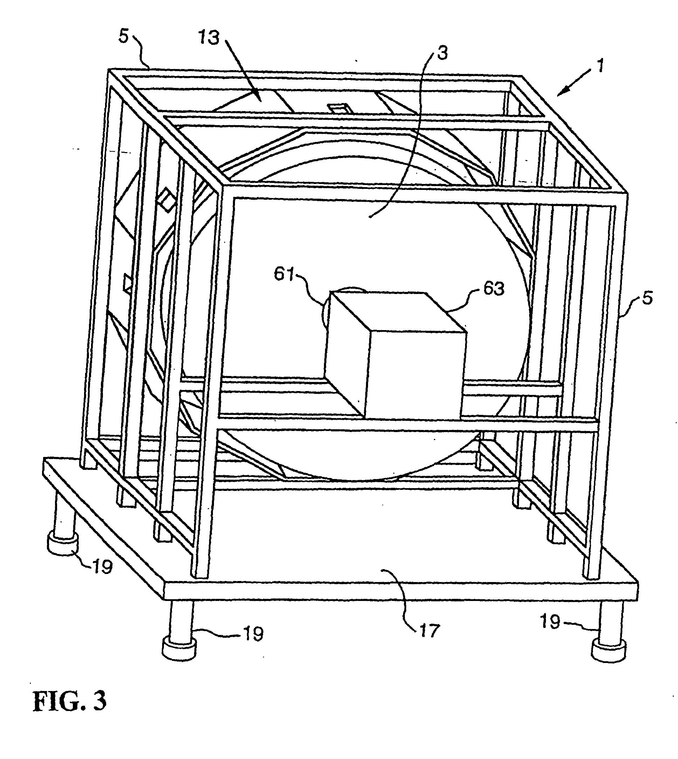

Figure 1 illustrates a machine 1 of the present invention of a first embodiment having a indexing table 3 rotatable in a predetermined direction and housed in a frame 5 and mounted, by mounting bolts 7, on a fixed shaft 61 (Figure 3) associated with an indexer 63 (Figure 3). Indexing table 3 has a plurality of horizontal mandrels 9 mounted thereon for holding thermoplastic sleeves.

Adjacent each mandrel 9 on machine 1 is a manufacturing station 11, mounted on a mounting ring 13, for performing a process step on a sleeve mounted on each mandrel 9. The configuration of manufacturing stations 11 on mounting ring 13 comprises the manufacturing path. The manufacturing path is closed or endless because the first station in the path is adjacent to the last station in the path. All sleeves are transported around the manufacturing path by the indexing table 3. All manufacturing stations 11 of the manufacturing path may be connected to a PLC device 15, as shown by the dashed lines. Indexing table 3 rotates relative to the manufacturing stations 11. A base plate 17 with a plurality of levelling legs 19 supports frame 5. In another configuration, PLC device 15 may be housed on base plate 17.

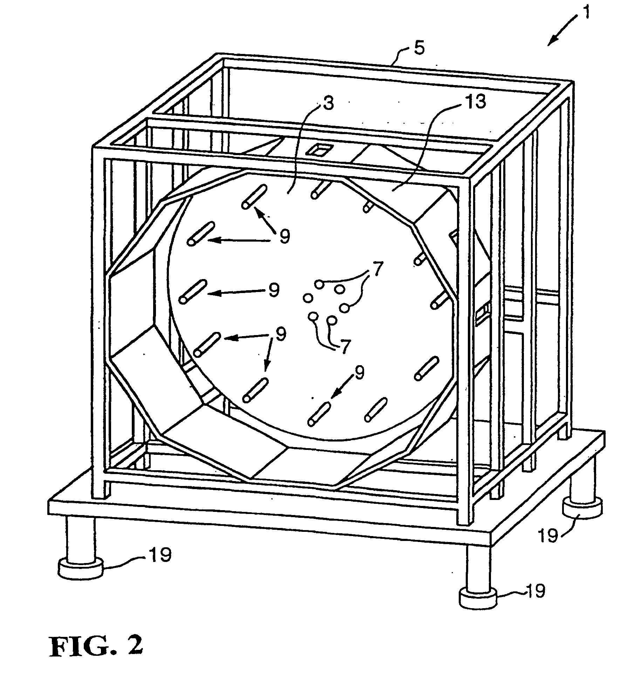

Figures 2 to 7 illustrate, in greater detail, machine 1 of the first embodiment. Figure 2 shows mandrels 9 of machine 1, shown without PLC device 15. Mandrels 9 are evenly spaced on indexing table 3. Indexing table 3 is typically a circular plate. While the preferred embodiment of indexing table 3 is an aluminium plate, indexing table 3 may be substituted by any other means which transports sleeves around a closed manufacturing path.

The manufacturing stations 11 of the closed manufacturing path (Figure 1) are mounted and arranged on a support, such as mounting ring 13 (Figure 2). Mounting ring 13 supports manufacturing stations 11 in a position such that manufacturing stations may perform a process step on a sleeve or tube on mandrel 9. In the embodiment in Figure 1, mounting ring 13 supports manufacturing stations 11 so that they are adjacent to and in front of a corresponding mandrel 9. Alternatively, stations 11 could be mounted on a frame (not shown) in the same plane as indexing table 3 so that manufacturing stations are beside a corresponding. mandrel 9.

Figure 3 is a perspective view from the rear of machine 1 of Figure 2, showing indexing table 3 connected to a shaft 61 rotatably mounted on an indexer 63. Indexer 63 may be conveniently mounted on frame 5.

Indexer 63 is a means for rotating or advancing indexing table 3 in a step-wise or incremental manner so that sleeves loaded onto mandrels 9 stop at each manufacturing station of the closed path for a time period long enough to effectuate a manufacturing process step. Indexing table 3, of this embodiment, rotates counterclockwise.

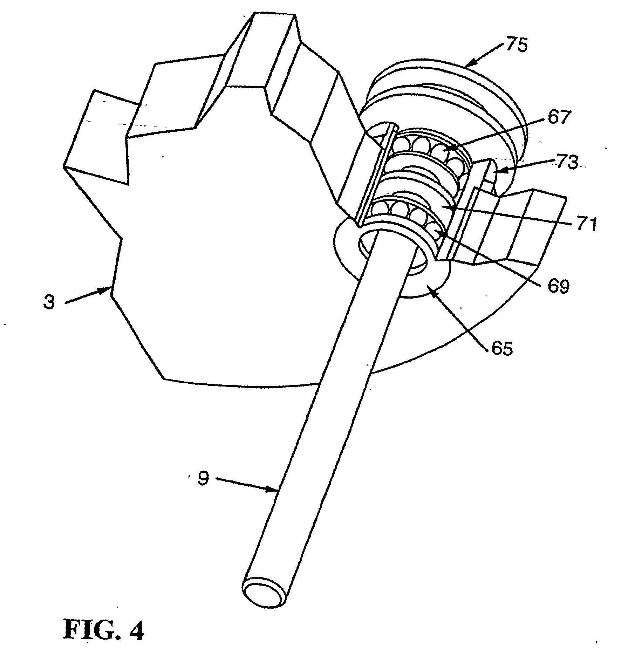

Figure 4 illustrates a housing assembly 65 for mandrel 9 on indexing table 3 of machine 1. Housing assembly 65 at the base of mandrel 9 allows mandrel 9 to rotate smoothly at various speeds, which is necessary for certain manufacturing steps. Inside housing assembly 65 are two rings 67 and 69 of ball bearings separated by a bearing spacer 71. A bearing clamp 73 is also added to housing assembly 65 for support. At one end of mandrel 9 is mounted a mandrel pulley 75 for improved weight distribution and a means to rotate mandrel 9. The desirable housing assembly 65 materials are durable materials, such as metal, because the components of housing assembly 65 wear.

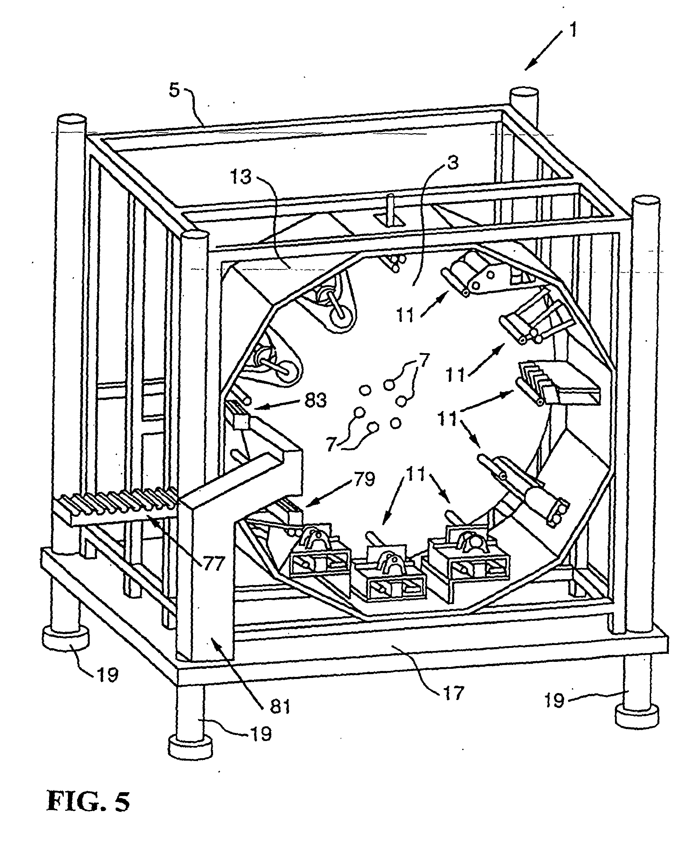

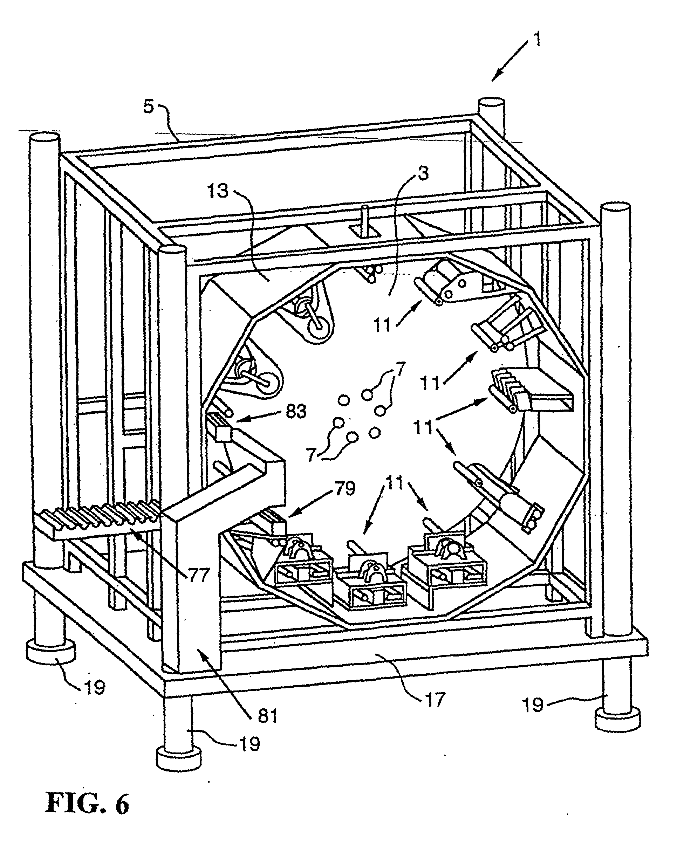

Figures 5 and 6 show perspective views of machine 1. Figure 5 shows machine 1 with pickle sorter 77 which supplies sleeves directly to load station 79. Figure 5 also shows which transports tubes from machine 1 that have been removed by unload station 83 from indexing table 3. Figure 6 shows, in greater detail, the relative locations of load station 79, unload station 83 and the remaining manufacturing stations.

To make machine 1 operable, machine 1 must be connected to a power source and other additional input sources as necessary, such as compressed air, water, electricity, steam, heated air, etc. In additional to supplying sleeves to machine 1, other raw materials such as caps, formed heads, etc. may be necessary for the manufacturing process.

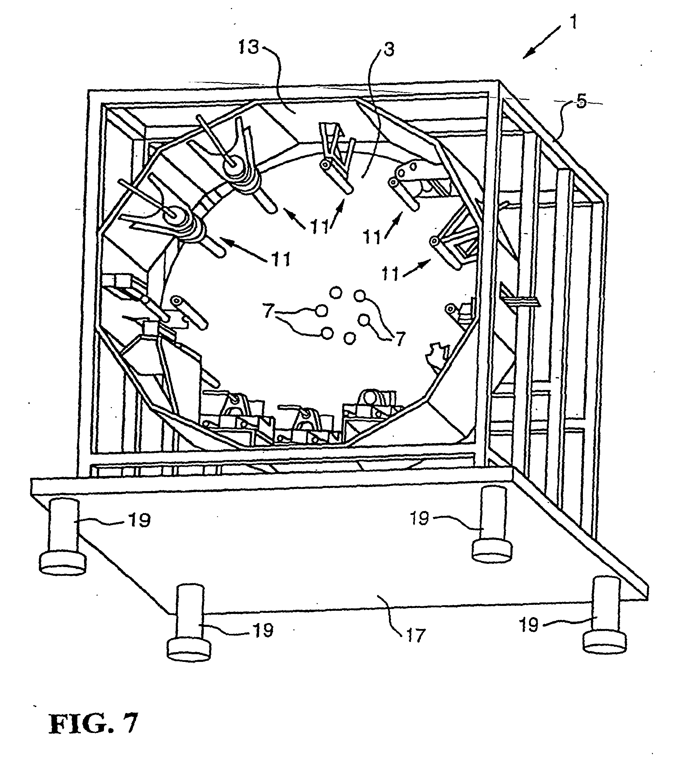

Figure 7 schematically shows the configuration of the 12 manufacturing stations 11 of machine 1, all connected to PLC device 15. The manufacturing stations and corresponding manufacturing process steps shown are: (A) load, (B) preheat, (C) heat, (D) mould, (E) treat, (F) print, (G) cure, (H) coat, (I) cure, (J) cap, (K) torque and (L) unload.

The minimum process steps necessary to form a tube from a sleeve are: loading the sleeve on the machine, forming a head on the sleeve, and unloading the headed sleeve. Besides the minimum steps, many other finishing or intermediate steps may be performed by additional manufacturing stations to produce a product of higher complexity.

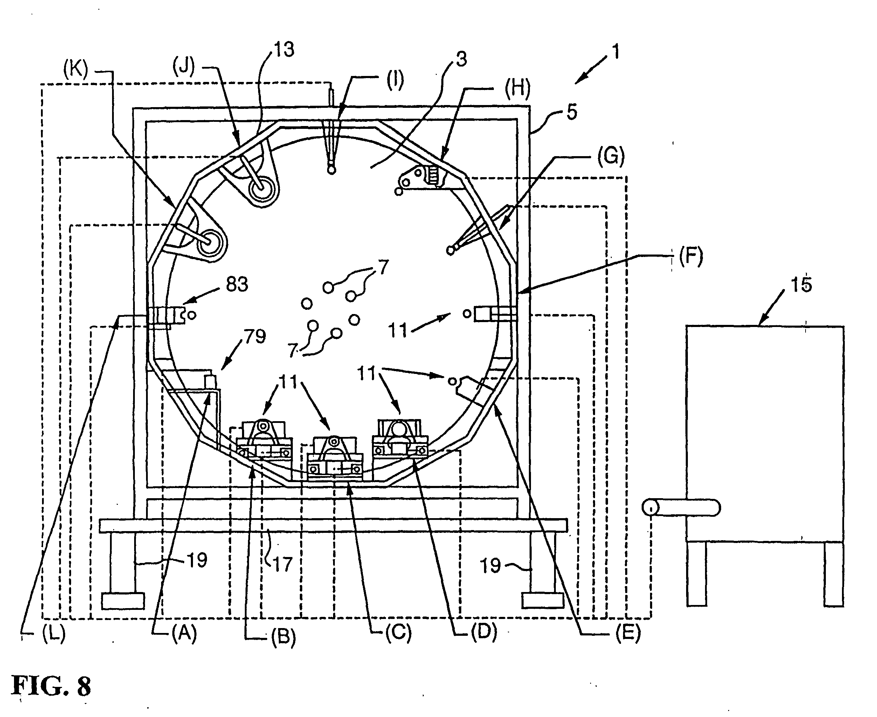

For example, machine. 85 a second embodiment of a machine of the present invention represented schematically in Figure 8, has 14 stations located adjacent to each of 14 mandrels 87 mounted on indexing table 89, which rotates counterclockwise via indexer 91 (Figure 7) in this embodiment. The 14 different stations and corresponding process steps are as follows: (A) load, (B) preheat, (C) heat, (D) mould, (E) treat, (F) label, (G) print, (H) cure, (I) coat, (J) cure, (K) tab seal, (L) cap, (M) torque and (N) unload.

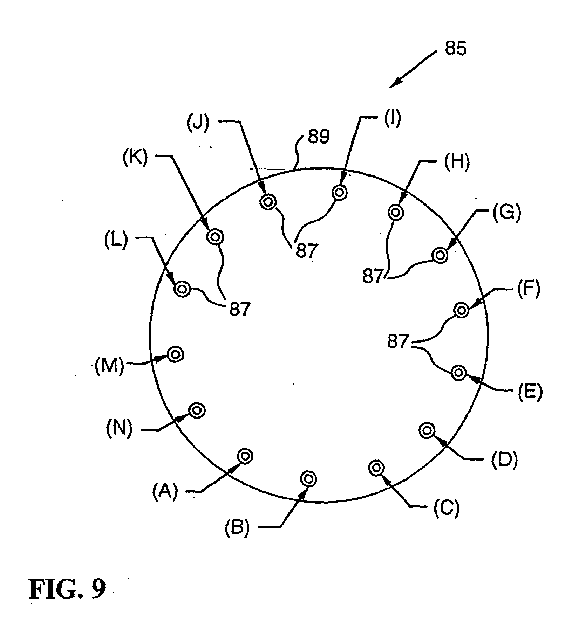

Figure 9 is a perspective view of machine 85 of Figure 8, showing partial illustrations of manufacturing stations (A) through (N). Machine 85 has three different decorating stations, (F) label, (G) print and (I) coat. It is unlikely that a manufacturing process would employ all three stations. Typically, only one or two of the decorating stations would be operable. Non-operable stations may be turned off manually or by a PLC device or they may be removed.

Again the configuration of the indexing device, manufacturing path and optional PLC device, depends on the desired tube to be produced. A decorated, sealed and capped tube will be produced using machine 85, a second embodiment of a machine of the.'present invention, illustrated in Figures 8 and 9 having 14 stations. All 14 manufacturing stations belonging to machine 85 are described below.

Each manufacturing station comprises a device for performing a manufacturing step and a means for mounting the device on a support or frame, like mounting ring 13 of Figure 1. The mounting means may include a portion which is adjustable, like an X-Y Positioning table, so the relative location of the device to the sleeve holding mandrel may be changed. The adjusting may be done manually or optionally by PLC control. The manufacturing stations operate continuously and may be coordinated with the rotation of the indexing device.

The manufacturing stations of the second embodiment shown in Figure 9 may be grouped into five general process steps: 1) Loading, 2) Forming a Head, 3) Decorating, 4) Finishing and 5) Unloading. As will be described below there are many ways to effectuate the manufacturing process steps to create decorated, sealed and capped tubes.

### 1) Loading Thermoplastic Sleeves

After transporting sleeves to a machine of the present invention each sleeve is loaded on a mandrel on the indexing device at a load station. The load station comprises a loading device that can load a sleeve onto a mandrel which is about 0.12 nn (0.005 inch) smaller in diameter than the sleeve, to provide a snug fit and a means to mount the loading device to the frame of the machine. Preferably, the sleeve should be loaded and positioned so that one end of the sleeve extends a predetermined distance over one end of the mandrel.

The loading device may be conventional device: a pneumatic push rod, a cam driven push rod, an advancing and retracting linear actuator, a crank motion device or a servo-motor driven push rod. The preferred loading station, a pneumatic push rod, is described below as load station (A).

### (A) Load Station

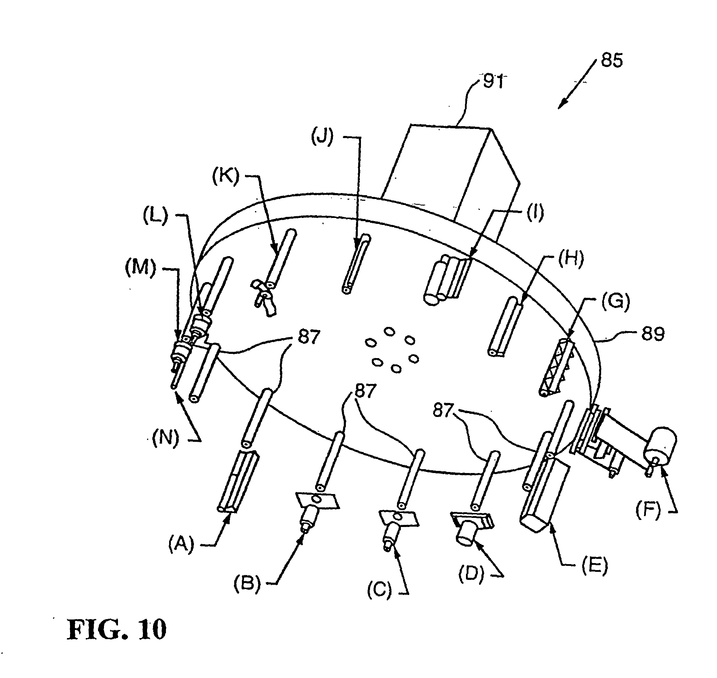

Figure 10 illustrates the preferred embodiment of load station (A), which loads and positions sleeves onto mandrel 87 on indexing table 89. Load station (A) comprises a pneumatic loading device and a means for mounting the loading device to a frame or a mounting ring, like mounting ring 13 of Figure 1. In this embodiment, pneumatic loading device comprises a pneumatic push rod 93 which pushes sleeves supplied to cradle loader 95, by pickle sorter 77 as shown in Figure 5, onto mandrel 87.

Pneumatic push rod 93 is driven back and forth along cradle loader 95 by air cylinder 97, supplied with air by air lines 99, positioned behind cradle loader 95 on a mounting bracket 101. Mounting bracket 101 is further mounted on mounting plate 103 which is attached to a mounting ring or equivalent, like ring 13 of Figure 1.

Cradle loader 95 has a "V" shaped surface 105 for aligning the centre axis of a thermoplastic sleeve resting on V-shaped surface 105 with the centre axis of mandrel 87, so the sleeve may be loaded onto mandrel 87, with a clearance as small as 0.005 inch, without damage. Cradle loader 95 is secured on mounting plate 103.

Both cradle loader 95 and air cylinder 97 are mounted on a portion of mounting plate 103 that is adjustable relative to the location of mandrel 87, much like an X-Y positioning table. The adjustment may be done manually by a X-axis adjustment rod 107 and a Y-axis adjustment rod 109. Alternatively the adjustment could be controlled by a PLC device.

Load station (A) operates as follows: A supplied to V-shaped surface 105 of cradle loader 95 from a supply means. When the centre axis of the sleeve is aligned with the centre axis of mandrel 87, push rod 93 pushes the sleeve along V- shaped surface 105 so that the sleeve loaded onto mandrel 87 and preferably positioned with a portion extending over the end of mandrel 87 so that an end is exposed.

The ideal cradle loader has a low coefficient of friction and a surface that will not mark or scratch sleeves which rest on the surface. Possible materials that have a non-marking surface with a low coefficient of friction are Teflon and Delrin, a type of lubricated nylon.

After sleeve is loaded onto mandrel 87, indexing table 89 advances or "indexes" one position and stops again so that the loaded sleeve is adjacent to the next station downstream load station (A) in the closed manufacturing path.

### 2) Forming a Head on Thermoplastic Sleeves

In the preferred embodiment, a head is formed on the exposed end of the loaded sleeve by first heating the exposed end above the glass transition temperature so the thermoplastic is molten and then forming the molten thermoplastic into a head with a mould die or equivalent device.

In this embodiment, a single indexing device supports sleeves and tubes in a variety of different stages of manufacturing. The speed of rotation of the indexing device is limited by the speed of the slowest manufacturing step. In this embodiment time is conserved by dividing the heating step between two stations, a preheat station and a heat station.

Machine 85, of the second embodiment, forms a head on a thermoplastic sleeve by the separate steps of preheating, heating and moulding. Three manufacturing stations are used, preheat (B), heat (C) and mould (D).

### (B) Preheat Station U

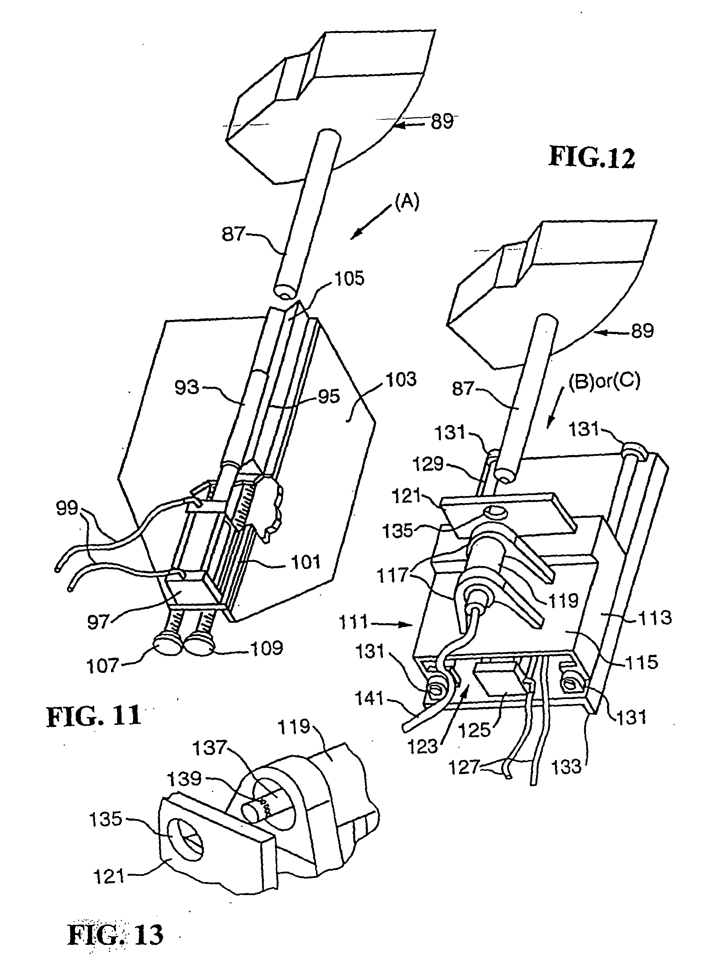

Figure 11 illustrates preferred preheat station (B), located downstream from load station (A). Preheat station (B) heats the portion of a sleeve which extends beyond the end of mandrel 87 above the glass transition temperature to create a molten thermoplastic mass for moulding into a head. Preheat station (B) has a heating device secured to a movable carriage and means to mount the device and carriage to the frame of the machine of the present invention, like mounting ring 13 of Figure 1. The carriage brings the heating device into proximity with the exposed portion of the sleeve. In Figure 11 carriage 111 has a frame or housing 113 which provides a top surface 115 for securing by brackets 117 a heating device 119 behind a sleeve cooling bushing 121 and an interior cavity 123, under top surface 115, for mounting or locating a means to impart motion to carriage 111, like an air cylinder carriage 111 is pneumatically driven by an air cylinder supplied with air by lines 127. Carriage 111 is slidably mounted on rods 129 which are linear guide means. Each rod 129 is secured by a bracket 131 at each end of rod 129 to mounting plate 133.

Preheat station (B) operates as follows: when a sleeve loaded and positioned on mandrel 87 is aligned with the centre axis of cooling bushing 121 and heating device 119 of preheat station (B), carriage 111 advances along rods 129 to bring heating device 119 in proximity to the sleeve. Carriage 111 may move by any conventional method, namely a servo or indexing motor, a pneumatic, hydraulic, electric or magnetic actuator.

As carriage 111 advances, the exposed portion of the sleeve enters and passes through an orifice 135 in cooling bushing 121. The exposed portion of the sleeve is partially inserted into heating device 119. Heating probe 137 located in heating device 119 extends into the exposed portion of the sleeve. The interior surface of the exposed portion is then heated by hot air exiting small openings 139, shown in Figure 12, at the end of heating probe 137. Air is supplied to heating device 119 by supply line 141. Cooling bushing 121, which may be cooled by a water jacket (not shown) substantially prevents the heat applied to the exposed end of the sleeve from spreading to the remainder of the sleeve.

Carriage 111 retracts by the action of air cylinder 125 to its original position out of the path of motion of mandrel 87, after a preselected period of time. The time of heating depends on the material and the thickness of the thermoplastic to be heated. After carriage 111 retracts, the preheating step is completed.

Any means for heating an air flow in heating device 119 is satisfactory. Typically, heating device 119 is made of a metal which has good electrical resistance. In this embodiment, heating device 119 is itself heated so that air flowing through it is raised to the desired temperature. The air flow rate, the temperature of the heating element and time of heating can all be controlled by a PLC device.

Preheat station (B) is made of light weight durable materials. For example, cooling bushing 121 may be made of aluminium and heating element 119 and heating probe 137 may be made of stainless steel. Aluminium provides a durable and light weight material for housing 113 of carriage 111. Rods 129 receive a lot of wear so they need to be made of a durable and hard material. Ideally, rods 129 can be made from cold rolled steel.

After the heating at preheat station (B), indexing table 89 advances one position so that the heated exposed end of the sleeve is now adjacent heat station (C).

### (C) Heat Station

Figures 11 and 12 also illustrate the preferred heat station (C) of this embodiment. Preferably heat station (C) is physically the same as preheat station (B). Heat station (C) operates in the same manner as preheat station (B) and heats the preheated exposed portion of the sleeve above the glass transition temperature. Depending on the heating time of the carriage **111** of heat station (C) (Figure 11) may move at the same rate or a different rate than carriage 111 of preheat station (B).

As the inside surface of the sleeve is heated close to the glass transition temperature, in this embodiment, the inside surface melts faster than the outside surface. The heating of a longitudinally stretched and extruded thermoplastic sleeve results in die swelling. Die swelling is the shrinking and thickening of a thermoplastic sleeve because the plastic memory of the sleeve wants to return the sleeve to its original larger shape, the shape of the die used in the extrusion process. The molten preform mass at the heated end of the sleeve thickens and is ideal for moulding a head onto the end of the sleeve.

After the heating is completed carriage 111 of heat station (C) retracts out of the path of mandrel 87 Indexing table 89 advances one position so that the hollow thermoplastic sleeve is adjacent mould station (D) downstream from heat station (C).

### (D) Mould station

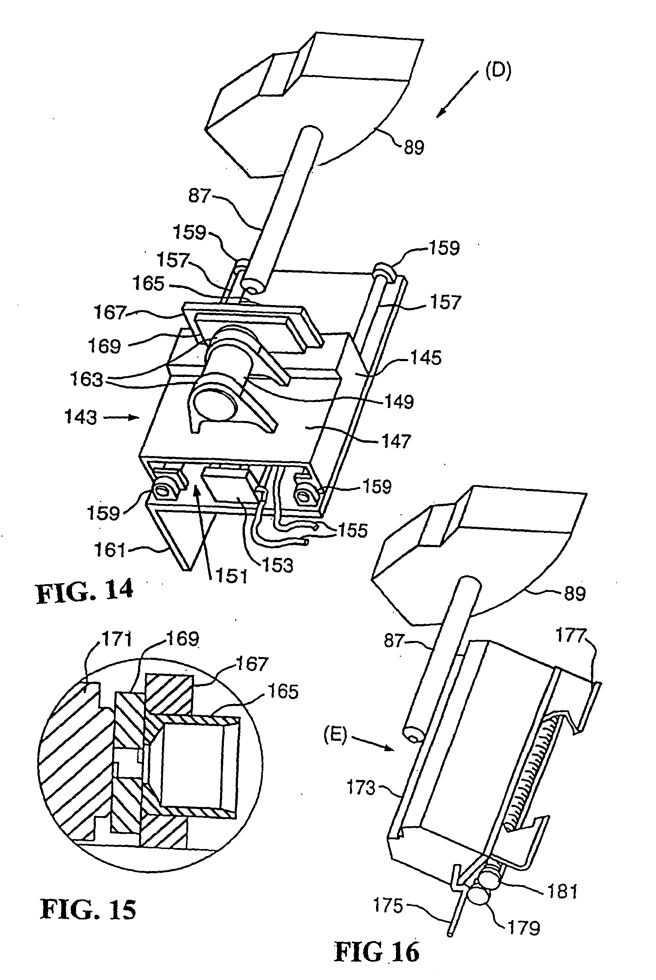

Figures 13 and 14 illustrate preferred mould station (D), located downstream from heat station (C). Mould station (D) forms a head from the heated thermoplastic mass at the end of the sleeve previously heated in preheat station (B) and heat station (C). Mould station (D) has a mould die secured to a movable carriage and means to mount the device and carriage to the frame of the machine of the present invention, like mounting ring 13 of Figure 1. The carriage brings the mould die into contact with the exposed of the sleeve.

In Figure 13 carriage 143 has a frame or housing 145 which provides a top surface 147 for securing a mould die 149 and an interior cavity 151, under top surface 147, for mounting or locating a means to impart motion to carriage 143, like an air cylinder 153. Carriage 143 is pneumatically driven by an air cylinder 153, supplied with air by lines 155. Carriage 143 is slidably mounted on rods 157 which are linear guide means. Each rod 157 is secured by a bracket 159 at each end of rod 157 to mounting plate 161

In this embodiment, mould die 149, secured by brackets 163 to top surface 147 of carriage 143 and preferably made of aluminium or steel, has four components: a mould bushing 165, a mould bushing plate 167, a thread insert plate 169 and an orifice pin bushing 171, as illustrated in cross-section in Figure 14. Mould bushing 165 forms the entrance to mould die 149. Mould bushing 165 guides the heated sleeve into mould die 149. The subsequent components, mould bushing plate 167, thread insert plate 169 and orifice pin bushing 171 shape portions of a head on the end of the sleeve. A die with four components, like mould die 149, allows a manufacturer to selectively shape the head of a sleeve with specific members to comprise mould die 149. Orifice pin bushing 171 contains a spike (not shown) located in the centre to form an orifice in the headed end of the thermoplastic tube

Alternatively the mould die may be a one-piece die which does not open. Such a die would be useful for forming a simple head on a sleeve. The die may take the form of a simple one-piece member with a concave face to shape the sleeve end portion of the molten thermoplastic into a closed end of a tube. But if threads or undercuts are desired on the head, then at least a portion of the mould die, for example, must open to allow the release of the tube once the head has been formed. Simple open and close pneumatic dies, like an air cylinder split die, are available for this purpose.

The time and pressure of the moulding step are important. The time for moulding should be limited to the time necessary to form a head from the heated thermoplastic. If a head is not removed from a die once formed, it may stick to the inner surface of the die. If the mould pressure is too great, the thermoplastic may be pressed out of the mould. If the mould pressure is weak, a head may be poorly formed and uneven. The time of moulding and pressure used will depend on the thermoplastic and its thickness. Time and pressure may be controlled by a PLC device.

After a head is formed, indexing table 89 indexes to the next station located downstream, treat station (E).

### (3) Decorating Thermoplastic Tubes

As previously mentioned there are a variety of ways to decorate the outside surface of a thermoplastic sleeve or thermoplastic tube if it has been so formed. The decoration step may precede the head forming step. In this embodiment however, decoration occurs after forming a head on the sleeve.

Decorating may occur by a variety of different means and methods. For example, a label may be applied to a tube by a label dispensing device. A tube may be marked with an indicia, including an individual indicia or a printed graphic. Many printing methods are know for printing indicia on tubes, such as offset printing, screen printing, foil printing, inkjet printing, letter computes printing, etc. A tube may also be decorated by being coated, heat embossed or etched.

The outside surface of a thermoplastic tube or sleeve is typically treated prior to decorating by printing, coating or labelling so that the outer surface is more receptive or adherent to a printed graphic. The type of treatment step will depend on the decoration step that follows.

The manufacturing stations used to decorate the thermoplastic article on machine 85 of the second embodiment include: treat station (E) for pretreating the thermoplastic article, label station (F), print station (G), coat station (I) and cure stations (H) and (J).

### (E) Treat station

Often before a printed indicia or label may be applied to thermoplasticpolymer must be treated to receive the printed indicia or label. There are a variety of ways to surface treat thermoplastic, such as, flame treatment, corona treatment, ionic treatment, electrical treatment, heat treatment or chemical treatment.

Corona treating is common and works as follows: treating system is like a capacitor. High voltage is applied to an electrode. Between the electrode and a "ground" is a dielectric, comprised of the thermoplastic tube and air. The voltage buildup on the electrode ionizes the air in the electrode, creating the highly energized corona. This excites the air molecules, reforming them into a variety of free radicals, which then bombard the surface, increasing its polarity by distributing free bond sites across it. This makes the surface more receptive to printed indicia.

Flame treatment is common for bottles, tubing, and automotive parts. Like corona, it induces an ionized airstream, which alters the surface as it impinges upon it. Flame treatment is accomplished by burning an ultra-lean gas mixture, whose excess oxygen is rendered reactive by high temperature.

Treatment, specifically corona and flame treatment, alter a polymer's surface chemistry. The presence of carbonyl and hydroxyl groups, which are absent on an untreated surfaces; enhances wetability, allowing inks, coatings and adhesives to flow out and coat uniformly.

Figure 15 illustrates treat station (E). Treat station (E) comprises treatment device 173, having supply line 175, which provides the means for treating a thermoplastic tube located on mandrel 87. In this embodiment, treatment device 173 is a corona treater. Treatment device 173 is secured to mounting bracket 177, that is adjustable the location of mandrel 87, much like an X-Y positioning table. Mounting bracket 177 has a X-axis adjustment rod 179 and a Y-axis adjustment rod 181. Mounting bracket 177 is further mounted on the frame of the Machine.

### (F) Label Stations

In this embodiment, the first decorating station downstream treat station (E) is label station (F). Label station (F) has a device for applying adhesive labels to the exterior surface of thermoplastic tubes and a means to mount the device to the frame (not shown) of the machine. A device suitable for applying labels to thermoplastic tubes may be used in label station (F). The indigo or zicon processes are preferable for labelling on thermoplastic tubes.

Figure 16 illustrates preferred label station (F). Label station (F) has a label dispenser 183, which dispenses sheet 185, having labels thereon, which travels through a series of directional cylinders 187 a, b, c, d, e, and f, which are label guides, to a final label intake roll 189. Sheet 185 exits dispensing device 183, travels to directional cylinder 187e, which is in close proximity with a tube on mandrel 87. When sheet 185 passes directional cylinder 187e, an individual label is pinched off sheet 185 and pressed against a tube. The empty label sheet 185 is rewound on label intake roll 189.

It is important that the labels are applied to tubes and not to mandrel 87. To avoid such error, a sensor can be included in label station (F) to detect whether a tube is located on mandrel 87.

Label station (F) is a labelling device housed in a frame 191 which is mounted on a frame or mounting ring, like mounting ring 13 as shown in Figure 1, of the machine of the present invention.

### (G) Print Station

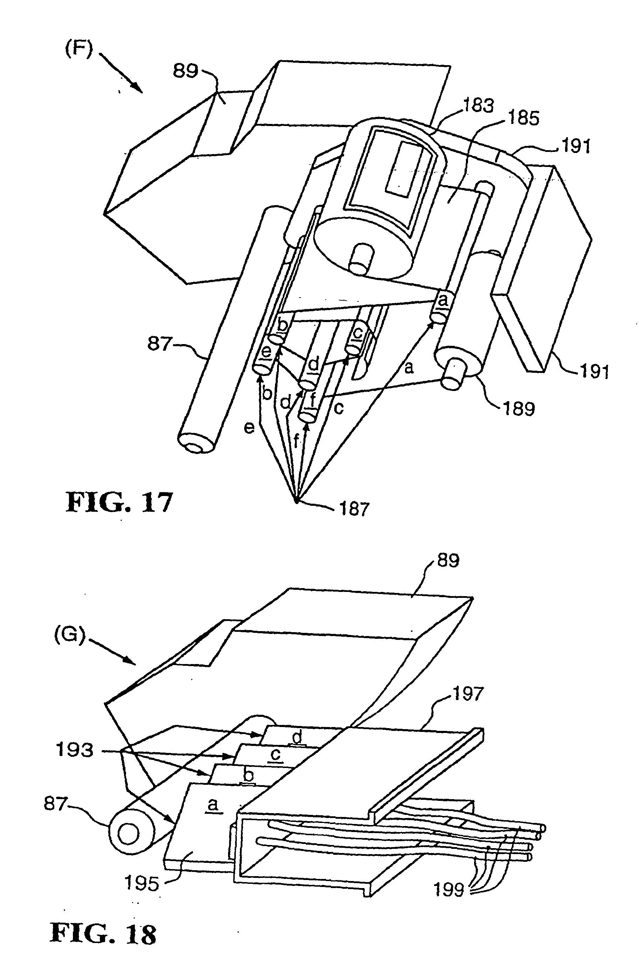

Instead of applying an adhesive label to the exterior of the thermoplastic tube, a printed indicia may be applied to the tube. Figure 17 illustrates a preferred inkjet printer of print station (G) having four printer head cartridges 193 a, b, c and d disposed on a bar 195 which is secured to mounting bracket 197, which is further mounted to the frame (not shown) of the machine of the present invention. Printer head cartridges 193 a, b, c and d are connected to a plurality of ink supply and control lines 199.

The inkjet printer of print station (G) is preferably controlled by a PLC device, A PLC device gives a manufacturer the ability to mark each tube with an individual indicia or the same printed graphic. A PLC device can control the ink flow and pattern of printing from the printer head cartridges of an inkjet printer. A PLC device may be programmed to print individual indicia, like a unique serial number on each tube. Thus an inkjet printer is advantageous because of the ability to quickly and automatically alter, modify, and change printed indicia on thermoplastic tubes.

After a printed indicia is applied to the tube, the printing must be cured.

### (H) Cure Station

Cure station (H), located downstream from print station (G), cures the printed indicia applied to the thermoplastic tube. Figure 18 illustrates preferred cure station (H), having a curing unit 201 connected to a supply and control line 203. Curing unit 201 is secured to mounting bracket 205 that is adjustable relative to the location of mandrel 87. Adjustment may be done manually by a X-axis adjustment rod 207 and a Y-axis adjustment rod 209. Alternatively the adjustment could be controlled by a PLC device. Mounting bracket 205 is secured to the mounting ring or equivalent of the frame of the machine of the present invention.

Curing unit 201 may cure the printed graphic by any known means such as heat, infrared light, hot air, or ultra violet light. In the embodiment illustrated in Figure 18, curing unit 201 is a hot air curing unit where hot air is discharged from curing unit 201 onto the tube.

Curing unit 201 may be left on continuously. Or, like other stations in the manufacturing process, it may be computer controlled so that the curing process may be controlled with more precision. Because curing unit 201 may be a UV light emitting unit, shutters (not shown) may be provided to shield operators from the exposure of UV light.

### (I) Coat Station

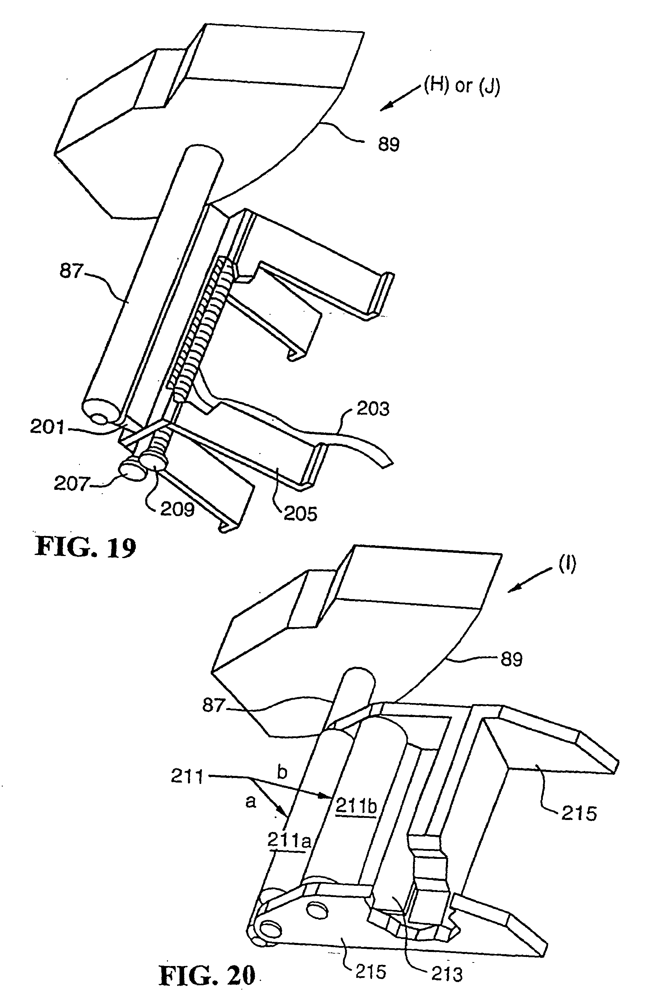

The third decorating station on machine 85 station (I) which is a station for applying a coat of material to a tube. This may be an alternative to decorating via label station (F) or station (G). Coat station (I) may also be used in conjunction with label station (F) and print station (G). Figure 19 illustrates preferred coat station (I). Coat station (I) has two coater rollers 211 a and b in front of a doctor blade 213, all of 42 which are supported on a mounting bracket 215 further mounted on the frame of the machine of the present invention. The two coater rollers 211 a and b contact a tube on mandrel 87 and apply a chemical coat directly onto the tube. The chemical coat is applied to coater rollers 211 a and b by doctor blade 213. Doctor blade is connected to a chemical supply line (not shown). After a chemical is applied on the tube the chemical coating is typically curved.

### (J) Cure Station

Final cure station (J) is the same as cure station (H) illustrated in Figure 18. Final cure station (J) is for the purpose of curing coating or indicia on tubes and may cure by the same means as cure station (H). In the present embodiment, final cure station (J) is a heat cure station having a curing unit 201 which is a hot air curing unit where hot air is discharged from curing unit 201 onto the tube.

After decorating, the thermoplastic tube may advance through a variety of different finishing stations for finishing the decorated tube. The number, arrangement and variety of finishing stations will depend on the desired tube to be produced.

### 4) Finishing ThermoplasticTubes

Besides forming a head on a thermoplastic sleeve and decorating the same, there are many different process steps that may be performed for finishing the thermoplastic tube. For example, the orifice on the formed head may be sealed with a protective foil, a closure means may be secured to the formed head and the closure may be torqued automatically for proper tightness.

Machine 85 of Figure 9 includes the following finishing stations: tab seal (K), cap (L) and a torque station (M).

### (K) Tab Seal Station

Figure 20 illustrates a tab seal station of the preferred embodiment. A tab sealer 217 is housed in a frame 219 comprising a mounting bracket 221 on which tab sealer 217 rests connected to a mounting plate 223 located on either side of the mounting bracket 221. This structure can support the remainder of the device as necessary to place a small protective seal, made of foil or other material, over the orifice of headed thermoplastic tubes.

A protective tab seal is added to tubes by means of a applicator device which, in the preferred embodiment is a tab seal punch 225 which cuts and places appropriately sized tab seal material 227 over the orifice of a thermoplastic tube.

As shown in Figure 20 tab. seal punch 225 is driven air cylinder 229 supplied with air by air and control lines 231. The tab seal punch 225 slidably moves, by the action of the air cylinder 229 through a tab seal die 235 on a tab seal mounting plate 237 and contacts tab seal material 227 on the other side of the tab seal die 235. This tab seal material 227 is supplied from a tab seal stock roller 239. Tab seal material 227 unwinds from stock roller 239, passes tab seal punch 225 and is taken up by tab seal foil intake roller 241.

By the pneumatic action of the tab seal punch rod 225 through the tab seal die 235, small portions of tab seal material 227 are cut from the ribbon of tab seal material 227 and brought into contact with the headed end of a thermoplastic tube whereby the tab seal foil is cut and secured.

The tab seal station (K) illustrated in Figure 20 operates continuously as long as it is supplied with tab seal foil stock. To possibly accommodate longer continuous manufacturing periods, a tab seal foil stock roller (not shown) may be mounted on top of the frame of the machine such that tab seal foil stock ribbon is wound from the foil stock roller down in front of the tab seal die to supply foil stock to the tab seal station. This ribbon may be wound under the die and back up to a larger intake roll (not shown) mounted elsewhere on the manufacturing station. Therefore this allows for the possibility of much larger stock and intake rolls to accommodate larger manufacturing times.

### (L) Cap Station

Cap station is located downstream from tab seal station (K). This station provides a means for adding a closure or cap, typically made of plastic, to the headed end of a tube. The cap may be either snapped onto the end of the thermoplastic tube or screwed on if the head has screw threads.

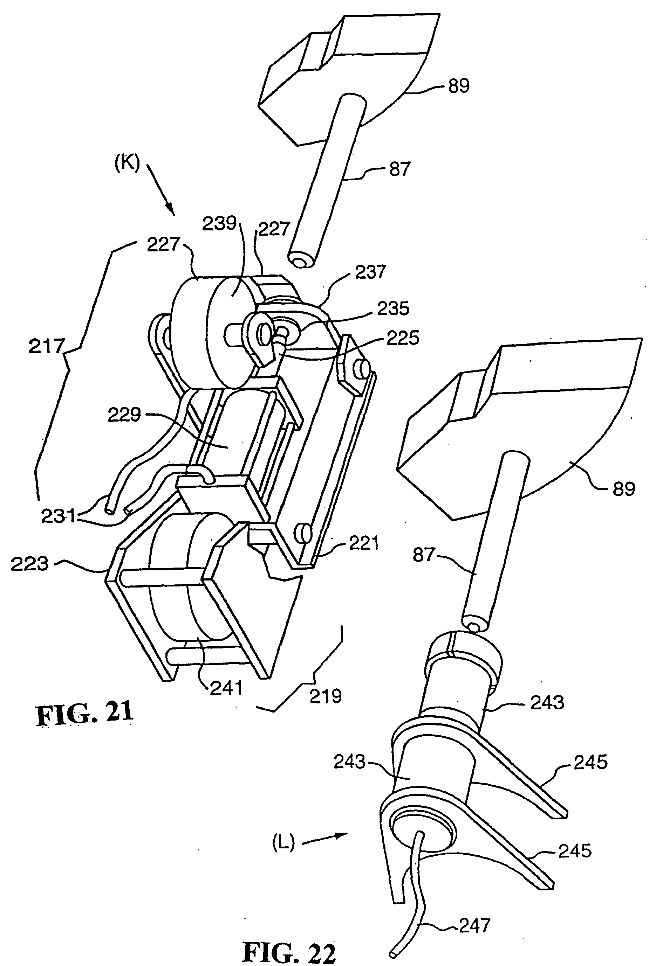

Preferable capping station (L), as shown in Figure 21, comprises a cap applicator 243 and brackets 245 for mounting cap applicator 243 to the frame of the machine, like ring 13 of Figure 1. Cap applicator 243 is a device which secures a cap or closure to the headed end of tubes. Each cap is individually placed on the headed thermoplastic tube by cap applicator 243. If the cap must be screwed onto the head of the thermoplastic tube, then cap applicator 243 has a screw type mechanism for rotating caps. Cap applicator 243 is continuously supplied with caps by a supply line (not shown). Cap applicator 243 is connected to power supply and control line 247.

After a cap is applied to the headed thermoplastic tube, the torque of the cap is typically adjusted.

### (M) Torque Station

Torque station (M) is located downstream from cap station (L). Torque station (M) is provided for adjusting the torque of the closure applied to the head of the thermoplastic tube in cap station (L).

As illustrated in Figure 22, torque station (M) comprises a cap torque chucking device 249 and brackets 251 for mounting torque chucking device 249 to the frame of the machine, like mounting ring 13 of Figure 1. Chucking device 249 adjusts the torque of each cap on each tube. It can accomplish this device by a mechanical screw means.

Torque station (M) is connected to power supply and control line 253.

### 5) Unloading ThermoplasticTubes

Manufacturing on a machine of the present invention ends with unloading tubes from mandrels 87. To unload thermoplastic tubes off mandrels, the following devices, each comprising an unload device or stripper, may be used: a pneumatic stripper, a stripper driven by a cam driver, an advancing and retracting linear actuator stripper, a crank motion stripper or a servo-motor driven stripper. The preferred unloading device is a pull rod stripper driven by an air cylinder which works similarly to push rod 93 of load station (A).

### (N) Unload Station

The final station of machine 85 is illustrated in Figure 85 as unload station (N). Unload station (N) is downstream torque station (M) and next to the first station in the manufacturing path load station (A).

Pneumatic stripper 255, with stripper plate 257, is driven back and forth along guide arm 259 by air cylinder 261, supplied with air by air lines 263, positioned behind guide arm 259on a mounting bracket 265. Mounting bracket 265 is further mounted on a mounting plate, like mounting plate 103 of Figure 12, which-is attached to a mounting ring or equivalent, like ring 13 of Figure 1. Stripper 255 removes the finished thermoplastic tubes from mandrel 87 by stripper plate 257 attached to the end of stripper 255.

Unload station (N) operates as follows: a stripper plate 257 slides back and forth in contact with mandrel tube on mandrel 87. Once the thermoplastic tube has been removed, stripper 255 and stripper plate 257 return to their original position.

All of the 14 stations described above operate to form one embodiment of a complete manufacturing process for decorated capped and torqued thermoplastic tubes.

### Additions & Alternates

The machine of the present invention is intended to be flexible to that manufacturing stations of various types, numbers and arrangements may be configured on the machine so that a large variety of tubes can be manufactured. In addition to the stations and methods described above, many other manufacturing stations and process steps are possible. Described below are other methods and devices for the machine of the present invention, without intending to be limiting.

Forming a head a sleeve, for example, may be done by a variety of different methods. For example, a previously formed head may be joined with a thermoplastic sleeve by heat welding or sonic welding the sleeve and the head together. Or a head may be formed from the end of the thermoplastic sleeve by the process disclosed in U.S. Patent No. 5,069,856, assigned to the assignee of the present invention. Further a head may be formed by injection blow molding or blow molding a head directly onto a sleeve loaded onto a mandrel on the indexing device.

Still further a head may be molded in a reusable closure means or cap. An example of molding in a reusable closure means is described co-pending application "Method of Forming a Headed Thermoplastic Tube with a Reusable Closure" assigned to the assignee of the present invention and incorporated by reference herein. Therefore, depending on the finished product desired any number of different methods may be used to form a head on the end of thermoplastic sleeve.

An example of forming a head in a reusable closure means is as follows: A method of forming a tube from a thermoplastic extruded, stretched sleeve is provided by positioning a sleeve over a forming mandrel with an exposed portion of the sleeve extending beyond a head forming end of the mandrel. The inner wall surface of the exposed portion of the thermoplastic sleeve is heated to a temperature above the glass transition temperature of the thermoplastic material to render the inner surface area molten, while maintaining the outer surface of the sleeve below the glass transition temperature so as to provide support for the exposed portion of the sleeve and retain the cylindrical shape thereof. The heated exposed portion is then shaped into a conical shape, such as by directing hot air against the outer surface thereof. Pressure is then applied to the conical shaped exposed portion of the thermoplastic extruded sleeve by contacting the exposed portion with a reusable closure means to form a headed thermoplastic tube. The pressure applied to the conical shape exposed end portion forces the same into a reusable closure means for the tube held in place by a holding or gripping member.

The reusable closure means used in this method functions as a mold for the neck or a mold for both the shoulder and neck when forming a head on the thermoplastic sleeve and a reusable cap for the finished thermoplastic tube. The reusable closure means is made of a material incompatible with the thermoplastic sleeve material such that when the molten end of the thermoplastic sleeve is pressed into the reusable closure means, the reusable closure means does not melt or stick to the molten preform.

Yet a further method for forming a head on a tube involves rotating a sleeve while heating it. An example of this method is described co-pending application "Method of Forming a Headed Thermoplastic Tube" assigned to the assignee of the present invention and incorporated by reference herein. A thermoplastic extruded, longitudinally stretched sleeve is positioned over a forming mandrel with an exposed portion of the sleeve extending beyond a head forming end of the mandrel. The mandrel is then rotated while the sleeve is heated. The rotation provides for even heat distribution at the location where the heat is applied. The rotation of the sleeve is stopped and pressure is then applied to the conical-shaped, exposed portion of the thermoplastic, extruded sleeve by contacting the exposed portion with a molding die to form a headed thermoplastic tube.

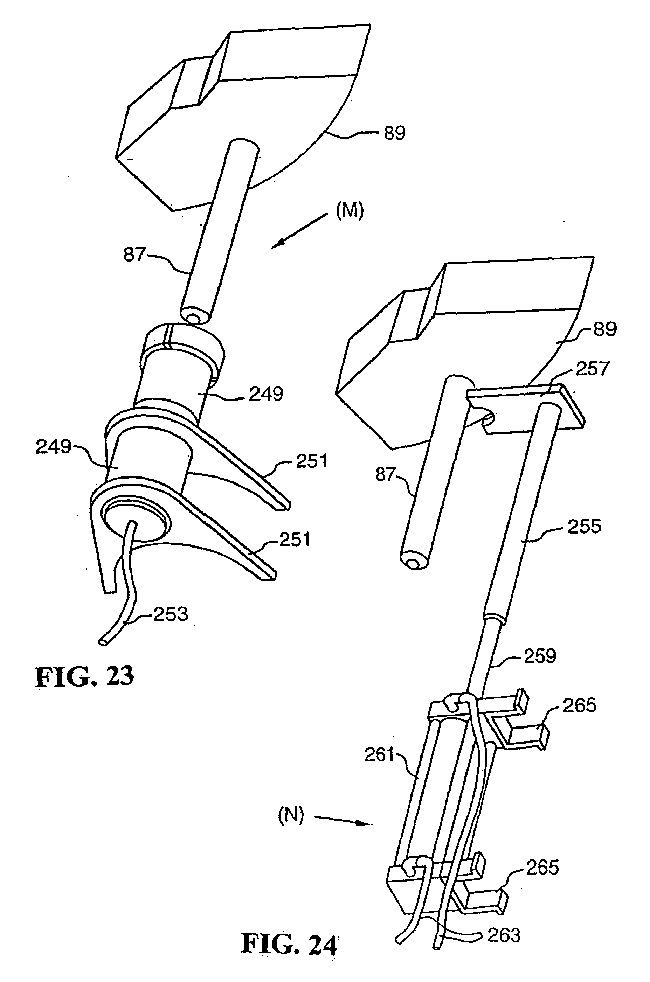

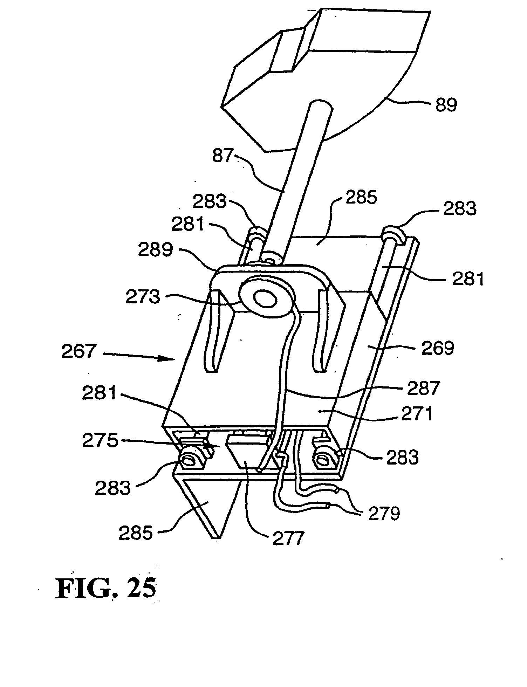

An alternate way to form a head is to weld a preformed head onto a sleeve by high frequency sound. Sonic weld station, illustrated in FIG. 24, may be substituted for preheat (B), heat (C), mold (d) stations of machine 85 as an alternative station for forming a head on'a sleeve.

FIG. 24 illustrates a preferred sonic welding station for welding by high frequency sound, a preformed head to a thermoplastic sleeve. Sonic weld station has a sonic welder attached to a moveable carriage and means to mount the device and carriage to the frame of the machine of the present invention, like mounting ring 13 of FIG. 1. The carriage brings the sonic welder into proximity with a sleeve.

In FIG. 24 carriage 267 has a frame or housing 269 which provides a top surface 271 for securing sonic welder 273 and an interior cavity 275, under top surface 271, for mounting or locating a means to impart motion to carriage 267, like an air cylinder 277. Carriage 267 is pneumatically driven by an air cylinder 277, supplied with air by lines 279. Carriage 267 is slidably mounted on rods 281 which are linear guide means. Each rod 281 is secured by a bracket 283 at each end to mounting plate 285.

The sonic weld station operates as follows: when a sleeve loaded and positioned on mandrel 87 of machine 85, for example, is aligned with sonic welder 273, carriage 267 advances along rods 281 to bring sonic welder 273 in proximity to the sleeve. As carriage 267 advances, an exposed portion of the sleeve enters and passes into sonic welder 273 which welds a preformed head to the sleeve by means of high frequency sound. Sonic welder 273 is connected to supply and control line 287 which supplies the input necessary for sonic welder 273 to operate.

Sonic welder 273 is mounted in housing 289 which is attached to top surface 271 of carriage 267. Carriage 267 retracts by the action of air cylinder 277 to its original position, out of the path of motion of mandrel 87, after a preselected period of time. The result of the manufacturing step is that a preformed head is welded onto a sleeve to form a tube.

Another method of forming tubes according to the present invention is by forming tubes from thermoplastic sheets. Cut sheets may be loaded onto a machine of the present invention and subsequently formed into sleeves which are later formed into tubes The method for forming tubes comprises: loading a flat sheet onto a supporting means on the indexing device; forming the flat sheet on the supporting means into the form of a sleeve; and welding opposed sheet edges together to form a closed sheet. The closed sheet is then formed into a tube.

Cut sheets can be supplied to a means for loading and wrapping the sheets around a mandrel. The sonic welding station is appropriate for welding the edges of the sheet together to form a seam. The carriage 267 of the sonic weld station described above (FIG. 24) can advance to the sonic welder 273 along the length of a sheet wrapped around a mandrel in order to selectively weld the joined edges of the sheet together. Alternatively the edges of a sheet could be heat welded together or adhered by any other means.

The machine of the present invention is also useful for completing the manufacturing of tubes if, for example, the sleeves have been partially processed at another location. Preprinted sleeves may be loaded onto a machine of the present invention and the manufacturing of tubes may be completed by forming a head on the sleeves and performing any desired finished step like, tab sealing, capping or torquing.

### IV. Manufacturing with a Programmable Logic Controller

A PLC device may be added to the machine of the present invention for the purpose of controlling the entire machine including the various manufacturing stations. In conventional process lines some of the manufacturing equipment is PLC controlled. However machine feedback control to control all aspects of a manufacturing step, product quality control and product feedback control and total mechanical control over sleeves and tubes have not been feasible. Such PLC control is almost impossible in conventional processing lines because large processing lines handle several hundred thermoplastic articles at a time and there is no systematic method for keeping track of individual articles and controlling the same on the conventional machines.

Figure 1 illustrates one embodiment of a machine of the present invention, with each manufacturing station connected to a PLC device, as indicated by the dashed lines. The PLC device can perform a variety of functions: A PLC device may be employed to control, by turning on or turning off, each manufacturing station along a manufacturing path. A PLC device can control the inputs needed for each manufacturing station. For example, a PLC device can control the heating temperature of the preheat and heat stations. The PLC can control the speed of each manufacturing station and the speed of the entire manufacturing machine.

A further function of the programmable logic controller will be to control the rejection of undesirable or "spoilt" tubes at a specific location of the closed path. Thus, at one predetermined location of the closed path downstream of the second location selected information on each of the tubes may be recorded. A signal may be generated based on the selected information. The signal may be input to the programmable logic controller and, with the use of the signal undesirable tubes may be rejected in a further location of the closed path downstream of the location where the information was recorded.

Thus one method for controlling the thermoplastic tube manufacturing tube manufacturing machine is the following: marking each tube with individual indicia; sensing selected information from tubes marked with individual indicia; generating a signal corresponding to each of manufacturing stations based on selected information; inputting signals to the PLC device; and with use of signals, controlling the operation of a corresponding manufacturing station with the PLC device.

Each thermoplastic tube may be marked with an individual indicia from a computer controlled printing device, like the inkjet printer of FIG. 17, which has the capability of uniquely marking each tube. The select information may be gathered from the tube marked with an individual indicia by a sensing means. Further signals may be generated based ion the selected information gathered. The signals may be input into a PLC device and with the use of the signals, the operation of corresponding manufacturing stations may be controlled. This type of process control is the use of a feedback loop based on individually marked tubes to indicate to a PLC device to make or stop producing certain types, kinds, or varieties of tubes.

For example if 15,000 tubes of three different lots of 5,000 tubes per lot, all having the same diameter, are to be manufactured, then a feedback loop based on marked indicia on each tube would allow a manufacturer to manufacture the 15,000 tubes continuously without stopping the machinery. After 5,000 tubes of one type have been manufactured and an indicia on tube number 5,000 was identified by sensing means, like a vision camera, then a signal could be generated based on this indicia, and sent to a PLC device. With the use of this signal, the PLC device may then control the operation of the machine, with a subsequent command control signal, to change production, like changing the decoration step or the finishing steps, to manufacture the second lot of 5,000 tubes. The process could be repeated for the third lot of 5,000 tubes. By this feedback control method based on marking each tune with an individual indicia, a manufacturer may operate a machine of the present invention with zero down time.

## Claims

1. A method of manufacturing thermoplastic tubes from thermoplastic sleeves comprising: providing longitudinally stretched, extruded thermoplastic sleeves having a continuous wall with inner and outer wall surfaces; providing an indexing device (3) rotatable about a shaft (61); providing supporting means constituted by forming mandrels (9) on said indexing device (3) or supporting each of said sleeves; loading each of said sleeves onto each of said forming mandrels (9) in a first location of a closed path, each of said forming mandrels naving a head forming end, said loading being carried out by positioning each sleeve over a respective one of the forming mandrels (9) with an exposed portion of each sleeve having an open end extending beyond said head forming end; advancing said sleeves mounted on said forming mandrels (9) along said closed path in response to rotating said indexing device (3) in a predetermined direction; forming a head on each of said sleeves, by moulding thermoplastic material of the sleeves, to create tubes in a second location of said closed path downstream of said first location, wherein said forming of a head on said sleeves to create tubes comprises the steps of: disposing the longitudinal axis of the forming mandrel (9) in horizontal orientation; rotating each of said forming mandrels about said axis; heating the inner wall surface of said exposed portion of each. said longitudinally stretched, extruded thermoplastic sleeve during said rotating by a heat source so that the shape of the exposed portion is controlled and the exposed portion is heated uniformly, wherein the heated exposed portion shrinks and thickens; stopping the rotating of said forming mandrel (9), and pressing the heated exposed portion with sufficient force into a mould cavity to form a head on each said thermoplastic sleeves from the shrunk and thickened exposed portion to thereby form said headed thermoplastic tube; advancing said tubes mounted on said forming mandrels along said closed path in response to rotating said indexing device in a predetermined direction; and unloading said tubes from said forming mandrels (9) in a third location of said closed path downstream of said head forming location between said second and said first location;

2. A method according two Claim 1 comprising the further steps of decorating said tubes in a further location of said closed path downstream of the second location, and finishing the tubes in another location of the said closed path which is downstream of said further location, and upstream of said third location.

3. The method according to Claim 2 wherein finishing said tubes is a finishing step selected from the group consisting of protective sealing, capping, and torquing.

4. The method according to Claim 3 or 4 wherein decorating said tubes is a decoration step selected from the group consisting of ink jet printing, offset printing, screen printing, embossing, labelling and coating.

5. A method according to any one of the preceding Claims comprising the steps of recording selected information on each of said tubes in a predetermined location of said closed path downstream of said second location; generating a signal based on said selected information; inputting said signal to a programmable logic controller (PLC) device; and, with use of said signal, rejecting undesirable tubes in a further location of said closed path downstream of said predetermined location.

6. A method according to any one of the preceding Claims wherein the process of loading a sleeve onto the supporting means comprises loading a flat sheet onto said supporting means; forming the flat sheet on said supporting means into the form of a sleeve; and welding opposed sheet edges together to form a closed sleeves.

7. An apparatus (1) for converting thermoplastic sleeves into completed thermoplastic tubes, with each completed tube having a head, comprising: an indexing device (3) rotatable about a shaft (61); forming mandrels (9) for supporting sleeves in a horizontal orientation mounted on said indexing device (3) for advancement along a closed path in response to relative rotation of said indexing device in a predetermined direction; a frame (5) for mounting said indexing device (3) and a plurality of manufacturing stations; said plurality of manufacturing stations comprising means for loading said sleeves onto said mandrels (9) in a first location of said closed path; means for forming a head on each sleeve, from thermoplastic material of the sleeve, to form tubes in a second forming location of said closed path downstream of said first location, said forming means being in the horizontal orientation, said means for forming of a head on said sleeves to create tubes further comprising: means for disposing the longitudinal axis of each forming mandrel (9) in a horizontal orientation; means for rotating each of said forming mandrels (9) about said axis, means forheating the inner wall surface of said exposed portion of each said longitudinally stretched, extruded thermoplastic sleeve during said rotating by a heat source so that the shape of the exposed portion is controlled and the exposed portion is heated uniformly, wherein the heated exposed portion shrinks and thickens to draw the heated exposed portion into a shrunken and thickened exposed portion; means for stopping the rotating of said forming mandrel (9); and means for pressing the heated exposed portion with sufficient force into a mould cavity to form a head on each said thermoplastic sleeves from the shrunken and thickened exposed portion to thereby form said headed thermoplastic tube; and means for unloading said tubes from said supporting means (9) in third location of said closed path downstream of said at least one completing location..

8. The apparatus of Claim 7 further comprising means for completing said tubes in at least one location of said closed path downstream of said forming location.

9. The apparatus according to Claim 7 or 8 wherein said means for loading sleeves onto said supporting means is a member selected from the group .consisting off a push rod driven by an air cylinder; a push rod driven by a cam driver an advancing and retracting linear actuator; a crank motion device and a servo-motor driven push rod.

10. The apparatus according to Claim 7, 8 or 9 wherein said means for forming a head on said sleeve is a member selected from the group consisting of a heater and a mould die; a sonic welder and a heat welder.

11. The apparatus according to any one of Claims 7 and 10 wherein said means for unloading said. tubes from said supporting means is a member selected from the group consisting of a stripper driven by an air cylinder; a stripper driven by a cam driver; an advancing and retracting linear actuator; and air blower; a crank motion stripper and a servo-motor driven stripper.

12. The apparatus according to any one of Claims 7 to 10 wherein said apparatus further comprises a PLC device connected to said indexing device, said loading means, said head forming means and said unloading means.

13. The apparatus according to any one of Claims 7 to 10 wherein said indexing device is a member selected from the group consisting of an indexing table and an indexing drum.

## Patentansprüche

1. Verfahren zur Herstellung von thermoplastischen Schläuchen aus thermoplastischen Hüllen, welches umfaßt: Bereitstellen von longitudinal gestreckten, extrudierten, thermoplastischen Hüllen mit einer kontinuierlichen Wand mit inneren und äußeren Wandflächen; Bereitstellen einer Schaltvorrichtung (3), die um eine Welle (61) drehbar ist; Bereitstellen von Tragemitteln, die durch Bildungsformkerne (9) auf der Schaltvorrichtung (3) zum Tragen jeder der Hüllen gebildet sind; Laden jeder der Hüllen auf jeweils die Bildungsformkerne (9) an einer ersten Stelle eines geschlossenen Weges, wobei jeder der Bildungsformkeme (9) ein Kopfbildungsende aufweist, wobei das Laden durchgeführt wird durch Positionieren jeder Hülle über einen entsprechenden der Bildungsformkerne (9), wobei ein exponierter Bereich jeder Hülle ein offenes Ende aufweist, das sich hinter das Kopfbildungsende erstreckt; Vorbewegen der Hüllen, die auf den Bildungsformkernen (9) montiert sind, entlang des geschlossenen Weges in Ansprechung auf ein Drehen der Schaltvorrichtung (3) in eine vorgegebene Richtung; Bilden eines Kopfes auf jeder der Hüllen durch Formen von thermoplastischem Material der Hüllen, um Schläuche an einer zweiten Stelle des geschlossenen Weges stromabwärts der ersten Stelle zu erzeugen, wobei das Bilden eines Kopfes auf den Hüllen, um Schläuche zu erzeugen, die Schritte umfaßt: Anordnen der Längsachse des Bildungsformkerns (9) in horizontaler Ausrichtung; Drehen jedes der Bildungsformkerne um die Achse; Erwärmen der inneren Wandfläche des exponierten Bereichs jeder der longitudinal gestreckten, extrudierten, thermoplastischen Hülle während des Drehens durch eine Wärmequelle, so daß die Form des exponierten Bereichs gesteuert wird und der exponierte Bereich einheitlich erwärmt wird, wobei sich der erwärmte exponierte Bereich zusammenzieht und verdickt; Stoppen des Drehens des Bildungsformkerns (9) und Pressen des erwärmten, exponierten Bereichs mit ausreichender Kraft in eine Formaushöhlung, um einen Kopf auf jeder der thermoplastischen Hüllen aus dem zusammengezogenen und verdickten exponierten Bereich zu bilden, um dadurch den thermoplastischen Schlauch mit einem Kopf zu bilden; Vorbewegen der Schläuche, die auf den Bildungsformkernen montiert sind, entlang des geschlossenen Weges in Ansprechung auf ein Drehen der Schaltvorrichtung in eine vorgegebene Richtung; und Entladen der Schläuche aus den Bildungsformkernen (9) an einer dritten Stelle des geschlossenen Weges stromabwärts der Kopfbildungsstelle zwischen der zweiten und der ersten Stelle.

2. Verfahren nach Anspruch 1, welches die weiteren Schritte eines Verzierens der Schläuche an einer weiteren Stelle des geschlossenen Weges stromabwärts der zweiten Stelle und ein Endbearbeiten der Schläuche an einer anderen Stelle des geschlossenen Weges, welche stromabwärts der weiteren Stelle und stromaufwärts der dritten Stelle ist, umfaßt.

3. Verfahren nach Anspruch 2, **dadurch gekennzeichnet, daß** das Endbearbeiten der Schläuche ein Endbearbeitungsschritt ist, der ausgewählt wird aus der Gruppe bestehend aus einer Schutzversiegelung, einer Kappenabdeckung und einer Verdrehung.

4. Verfahren nach Anspruch 3 oder 4, **dadurch gekennzeichnet, daß** das Verzieren der Schläuche ein Verzierungsschritt ist, der ausgewählt wird aus der Gruppe bestehend aus einem Tintenstrahldrucken, einem Offset-Drucken, einem Siebdrucken, einem Prägen, einem Etikettieren und einem Beschichten.

5. Verfahren nach einem der vorangehenden Ansprüche, umfassend die Schritte eines Aufzeichnens ausgewählter Information auf jedem der Schläuche an einer vorgegebenen Stelle des geschlossenen Weges stromabwärts der zweiten Stelle; eines Erzeugens eines Signals, das auf der ausgewählten Information basiert; eines Eingebens des Signals in eine programmierbare Verknüpfungssteuerungsvorrichtung (PLC); und, unter Verwendung des Signals, eines Ablehnens nicht gewünschter Schläuche an einer weiteren Stelle des geschlossenen Weges stromabwärts der vorgegebenen Stelle.

6. Verfahren nach einem der vorangehenden Ansprüche, **dadurch gekennzeichnet, daß** das Verfahren des Ladens einer Hülle auf das Tragemittel ein Laden eines flachen Bogens auf das Tragemittel; ein Bilden des flachen Bodens auf dem Tragemittel in die Form einer Hülle; und ein Zusammenschweißen gegenüberliegender Bogenränder, um eine geschlossene Hülle zu bilden, umfaßt.

7. Vorrichtung (1) zum Umwandeln thermoplastischer Hüllen in vollständige thermoplastische Schläuche, wobei jeder vollständige Schlauch einen Kopf aufweist, welche umfaßt: eine Schaltvorrichtung (3), die um eine Welle (61) drehbar ist; Bildungsformkerne (9) zum Tragen von Hüllen in einer horizontalen Ausrichtung, die auf der Schaltvorrichtung (3) zum Vorbewegen entlang eines geschlossenen Weges in Ansprechung auf eine relative Drehung der Schaltvorrichtung in eine vorgegebene Richtung montiert sind; einen Rahmen (5) zum Montieren der Schaltvorrichtung (3) und einer Vielzahl von Herstellungsstationen; wobei die Vielzahl von Herstellungsstationen umfaßt: Mittel zum Laden der Hüllen auf die Formkerne (9) an einer ersten Stelle des geschlossenen Weges; Mittel zum Bilden eines Kopfes auf jeder Hülle aus thermoplastischem Material der Hülle, um Schläuche an einer zweiten Bildungsstelle des geschlossenen Weges stromabwärts der ersten Stelle zu bilden, wobei das Bildungsmittel in der horizontalen Ausrichtung ist, wobei das Mittel zum Bilden eines Kopfes auf den Hüllen, um Schläuche zu erzeugen, ferner umfaßt: Mittel zum Anordnen der Längsachse jedes Bildungsformkerns (9) in einer horizontalen Ausrichtung; Mittel zum Drehen jedes der Bildungsformkerne (9) um die Achse, Mittel zum Erwärmen der inneren Wandfläche des exponierten Bereichs jeder der longitudinal gestreckten, extrudierten, thermoplastischen Hülle während des Drehens durch eine Wärmequelle, so daß die Form des exponierten Bereichs gesteuert wird und der exponierte Bereich einheitlich erwärmt wird, wobei der erwärmte exponierte Bereich sich zusammenzieht und verdickt, um den erwärmten exponierten Bereich in einen zusammengezogenen und verdickten exponierten Bereich zu ziehen; Mittel zum Stoppen der Drehung des Bildungsformkerns (9), und Mittel zum Pressen des erwärmten exponierten Bereichs mit ausreichender Kraft in eine Formaushöhlung, um einen Kopf auf jeder der thermoplastischen Hüllen aus dem zusammengezogenen und verdickten exponierten Bereich zu bilden, um dadurch den thermoplastischen Schlauch mit einem Kopf zu bilden; und Mittel zum Entladen der Schläuche aus dem Tragemittel (9) an einer dritten Stelle des geschlossenen Weges stromabwärts der wenigstens einen Vervollständigungsstelle.

8. Vorrichtung nach Anspruch 7, welche weiter Mittel zum Vervollständigen der Schläuche an wenigstens einer Stelle des geschlossenen Weges stromabwärts der Bildungsstelle umfaßt.

9. Vorrichtung nach Anspruch 7 oder 8, **dadurch gekennzeichnet, daß** das Mittel zum Laden von Hüllen auf das Tragemittel ein Bauteil ist, das ausgewählt ist aus der Gruppe bestehend aus einer Schubstange, die durch einen Luftzylinder angetrieben wird; einer Schubstange, die durch einen Kurvenantrieb angetrieben wird; einem Vorund Einzugsstellantrieb; einer Kurbelbewegungsvorrichtung und einer mit einem Servomotor angetriebenen Schubstange.

10. Vorrichtung nach Anspruch 7, 8 oder 9, **dadurch gekennzeichnet, daß** das Mittel zum Bilden eines Kopfes auf der Hülle ein Bauteil ist, das ausgewählt ist aus der Gruppe bestehend aus einer Heizvorrichtung und einem Formpreßring; einem Ultraschallverschweißer und einem Wärmeverschweißer.

11. Vorrichtung nach einem der Ansprüche 7 und 10, **dadurch gekennzeichnet, daß** das Mittel zum Entladen der Schläuche aus den Tragemitteln ein Bauteil ist, das ausgewählt ist aus der Gruppe bestehend aus einem Abzieher, der durch einen Luftzylinder angetrieben wird; einem Abzieher, der durch einen Kurvenantrieb angetrieben wird; einem Vor- und Einzugsstellantrieb; und einem Luftgebläse; einem Kurbelbewegungsabzieher und einem mit einem Servomotor angetriebenen Abzieher.

12. Vorrichtung nach einem der Ansprüche 7 bis 10, **dadurch gekennzeichnet, daß** die Vorrichtung ferner eine PLC-Vorrichtung umfaßt, die mit der Schaltvorrichtung, dem Ladungsmittel, dem Kopfbildungsmittel und dem Entladungsmittel verbunden ist.

13. Vorrichtung nach einem der Ansprüche 7 bis 10, **dadurch gekennzeichnet, daß** die Schaltvorrichtung ein Bauteil ist, das ausgewählt ist aus der Gruppe bestehend aus einen Schalttisch und einer Schalttrommel.

## Revendications

1. Procédé de fabrication de tubes thermoplastiques à partir de manchons thermoplastiques, consistant à : fournir des manchons thermoplastiques extrudés, étirés longitudinalement, présentant une paroi continue dotée de surfaces interne et externe ; fournir un dispositif d'indexage (3) pouvant pivoter autour d'un axe (61) ; fournir des moyens de support constitués par des mandrins de formage (9) sur ledit dispositif d'indexage (3), afin de supporter chacun desdits manchons ; charger chacun desdits manchons sur chacun desdits mandrins de formage (9) en un premier emplacement d'une boucle fermée, chacun desdits mandrins de formage (9) comportant une extrémité de formage de tête, ledit chargement s'effectuant en positionnant chaque manchon sur un mandrin correspondant des mandrins de formage (9), une partie exposée de chaque manchon présentant une extrémité ouverte s'étirant au-delà de ladite extrémité de formage de tête ; faire avancer lesdits manchons montés sur lesdits mandrins de formage (9) le long de ladite boucle fermée, en réponse au pivotement dudit dispositif d'indexage (3) dans une direction prédéfinie ; former une tête sur chacun desdits manchons, par moulage du matériau thermoplastique des manchons, afin de créer des tubes en un deuxième emplacement de ladite boucle fermée, en aval dudit premier emplacement, ledit formage d'une tête sur lesdits manchons en. vue de créer des tubes comprenant les étapes consistant à : disposer l'axe longitudinal du mandrin de formage (9) dans le sens horizontal ; faire pivoter chacun desdits mandrins de formage autour dudit axe ; chauffer la surface de paroi interne de ladite partie exposée de chacun desdits manchons thermoplastiques extrudés, étirés longitudinalement, au cours dudit pivotement à l'aide d'une source de chaleur, de manière à contrôler la forme de la partie exposée et à chauffer uniformément la partie exposée, moyennant quoi la partie exposée et chauffée rétrécit et épaissit ; arrêter le pivotement dudit mandrin de formage (9), et presser la partie exposée et chauffée dans la cavité d'un moule avec une force suffisante pour former une tête sur chacun desdits manchons thermoplastiques, à partir de la partie exposée rétrécie et épaissie, afin de former ainsi ledit tube thermoplastique à tête ; faire avancer lesdits tubes montés sur lesdits mandrins de formage le long de ladite boucle fermée, en réponse au pivotement dudit dispositif d'indexage dans une direction prédéfinie ; et décharger lesdits tubes desdits mandrins de formage (9) en un troisième emplacement de ladite boucle fermée, en aval dudit emplacement de formage des têtes, entre ledit deuxième et ledit premier emplacement.

2. Procédé selon la revendication 1, comprenant les étapes supplémentaires de décoration desdits tubes en un autre emplacement de ladite boucle fermée en aval du deuxième emplacement, et de finition des tubes en un autre emplacement de ladite boucle fermée qui se trouve en aval dudit autre emplacement, et en amont dudit troisième emplacement.

3. Procédé selon la revendication 2, dans lequel la finition desdits tubes est une étape de finition choisie dans le groupe comprenant l'étanchéisation protectrice, le sertissage et le serrage.

4. Procédé selon la revendication 3 ou 4, dans lequel la décoration desdits tubes est une étape de décoration choisie dans le groupe comprenant l'impression par jet d'encre, l'impression offset, la sérigraphie, l'estampage, l'habillage et le placage.

5. Procédé selon l'une quelconque des revendications précédentes, comprenant les étapes consistant à enregistrer les informages sélectionnées sur chacun desdits tubes en un emplacement prédéfini de ladite boucle fermée, en aval dudit deuxième emplacement ; générer un signal basé sur lesdites informages sélectionnées ; introduire ledit signal dans un dispositif d'automate programmable (PLC) ; et, en utilisant ledit signal, rejeter les tubes indésirables en un autre emplacement de ladite boucle fermée, en aval dudit emplacement prédéfini.

6. Procédé selon l'une quelconque des revendications précédentes, dans lequel le processus de chargement d'un manchon sur les moyens de support comprend le chargement d'une feuille plane sur lesdits moyens de support ; le formage de la feuille plane en forme de manchon sur lesdits moyens de support; et l'assemblage par soudage des bords opposés de la feuille afin de former un manchon. fermé.

7. Appareil (1) de transformation de manchons thermoplastiques en tubes thermoplastiques achevés, chaque tube achevé comportant une tête, l'appareil comprenant : un dispositif d'indexage (3) pouvant pivoter autour d'un axe (61) ; des mandrins de formage (9) permettant de supporter dans le sens horizontal les manchons montés sur ledit dispositif d'indexage (3) afin d'avancer le long d'une boucle fermée, en réponse au pivotement correspondant dudit dispositif d'indexage dans une direction prédétinie ; un cadre (5) de montage dudit dispositif d'indexage (3) et une pluralité de stations de fabrication ; ladite pluralité de stations de fabrication comprenant: des moyens permettant de charger lesdits manchons sur lesdits mandrins (9) en un premier emplacement de ladite boucle fermée ; des moyens permettant de former une tête sur chaque manchon, à partir du matériau thermoplastique du manchon, pour former des tubes en un deuxième emplacement de formage de ladite boucle fermée, en aval dudit premier emplacement, lesdits moyens de formage étant dans le sens horizontal, lesdits moyens de formage d'une tête sur lesdits manchons en vue de créer des tubes comprenant en outre : le moyen de disposer l'axe longitudinal de chaque mandrin de formage (9) dans le sens horizontal ; le moyen de faire pivoter chacun desdits mandrins de formage (9) autour dudit axe ; le moyen de chauffer la surface de paroi interne de ladite partie exposée de chacun desdits manchons thermoplastiques extrudés, étirés longitudinalement, au cours dudit pivotement à l'aide d'une source de chaleur, de manière à contrôler la forme de la partie exposée et à chauffer uniformément la partie exposée, moyennant quoi la partie exposée et chauffée rétrécit et épaissit pour se transformer en une partie exposée et chauffée rétrécie et épaissie ; le moyen d'arrêter le pivotement dudit mandrin de formage (9), et le moyen de presser la partie exposée et chauffée dans la cavité d'un moule avec une force suffisante pour former une tête sur chacun desdits manchons thermoplastiques, à partir de la partie exposée rétrécie et épaissie, afin de former ainsi ledit tube thermoplastique à tête ; et le moyen de décharger lesdits tubes desdits moyens de support (9) en un troisième emplacement de ladite boucle fermée, en aval dudit au moins un emplacement d'achèvement.

8. Appareil selon la revendication 7, comprenant un outre les moyens d'achever lesdits tubes en au moins un emplacement de ladite boucle fermée, en aval dudit emplacement de formage.

9. Appareil selon la revendication 7 ou 8, dans lequel ledit moyen de chargement des manchons sur lesdits moyens de support est un élément choisi dans le groupe comprenant une biellette entraînée par un vérin pneumatique ; une biellette entraînée par came ; un actionneur linéaire d'avance et de retrait, un dispositif de mouvement de manivelle et une biellette entraînée par servomoteur.

10. Appareil selon la revendication 7, 8 ou 9 dans lequel ledit moyen de formage d'une tête sur ledit manchon est un élément choisi dans le groupe comprenant un dispositif de chauffage et une filière de moulage ; un poste de soudure par ultrasons et un poste de soudure thermique.

11. Appareil selon l'une quelconque des revendications 7 et 10, dans lequel ledit moyen de déchargement desdits tubes desdits moyens de support est un élément choisi dans le groupe comprenant un extracteur entraîné par un vérin pneumatique ; un extracteur entraîné par came ; un actionneur linéaire d'avance et de retrait ; un pulseur d'air ; un extracteur à mouvement de manivelle et un extracteur entraîné par servomoteur.

12. Appareil selon l'une quelconque des revendications 7 à 10, ledit appareil comprenant en outre un dispositif d'automate programmable relié audit dispositif d'indexage, audit moyen de chargement, audit moyen de formage de tête et audit moyen de déchargement.

13. Appareil selon l'une quelconque des revendications 7 à 10, dans lequel ledit dispositif d'indexage et un élément choisi dans le groupe comprenant un plateau indexeur et un tambour indexeur.
